# EUROPEAN PATENT SPECIFICATION

(11) **EP 0 466 112 B1**
(45) Date of publication and mention of the grant of the patent: **10.04.1996**
(21) Application number: 91111428.8
(22) Date of filing: 09.07.1991
(51) Int. Cl.: G02F 1/1337, G02F 1/1333

(54) **Electrooptic device**
Elektrooptische Vorrichtung
Dispositif électro-optique

(30) Priority: 12.07.1990 JP 184810/90
(43) Date of publication of application: 15.01.1992
(73) Proprietor: SEIKO EPSON CORPORATION, Shinjuku-ku Tokyo-to (JP)
(72) Inventor: Ohara, Hiroshi,c/o Seiko Epson Corporation, Suwa-shi, Nagano-ken (JP)
(74) Representative: Hoffmann, Eckart, Dipl.-Ing.

(56) References cited:
- PATENT ABSTRACTS OF JAPAN vol. 14, no. 279 (P-1062)15 June 1990 & JP-A-2 082 222
- PATENT ABSTRACTS OF JAPAN vol. 8, no. 248 (P-313)14 November 1984 & JP-A-59 121 316
- PATENT ABSTRACTS OF JAPAN vol. 12, no. 210 (P-717)16 June 1988 & JP-A-63 008 633
- PATENT ABSTRACTS OF JAPAN vol. 8, no. 23 (P-251)31 January 1984 & JP-A-58 178 325
- PATENT ABSTRACTS OF JAPAN vol. 11, no. 386 (P-647)17 December 1987 & JP-A-62 153 826
- PATENT ABSTRACTS OF JAPAN vol. 13, no. 250 (P-882)12 June 1989 & JP-A-1 050 027

## Description

The present invention relates to an electrooptic device and, more particularly, to an electrooptic device having a color filter layer.

Various methods are known for forming a transparent electrode on a color filter, these methods differing with respect to form and quality of the color filter, existence or non-existence of a protective layer and others (see e.g. JP-A-233720/1986, JP-A-260224/1986, JP-A-198131/1986 and JP-A-153826/1987).

In the prior art, a color filter and a protective layer are formed of an organic resin since it allows to achieve fine patterns. The heat resistance of such organic resin is relatively low, preventing temperatures above 220 to 230°C to be used when a transparent electrode is formed directly on the color filter or through the protective layer. Such low temperature results in a poor film quality of the transparent electrode, leaving problems such as a low surface hardness, for example, and hence an insufficient physical strength. Furthermore, electric corrosion occurs when an electric field is applied under an environment including an electrolyte such as water or the like, i.e. the chemical resistance is also unsatisfactory. These problems result in the reliability of the electrooptic device as a whole being poor. Therefore, a method for pigmenting the color filter formed through a dying process has hitherto been employed for enhancing the heat resistance of the color filter itself. Since, however, the problem is inherent in the heat resistance of the holding resin a sufficient improvement cannot be achieved. Attempts have been made to enhance the heat resistance of the resin but the results turned out to be not satisfactory. Instead, other problems occurred, namely that short wavelength light is absorbed and turns the resin yellow, that the resistance to alkali is decreased and others.

As an alternative a method for forming the color filter by sublimating a substance with high heat resistance such as a pigment or the like into a porous inorganic layer has been proposed. However, even in this case problems as to pattern precision, color purity and others remain unsolved.

JP-A-2-082222 and JP-A-58-178325 disclose an electrooptic device comprising a first substrate, a transparent electrode formed thereon, an orientation film formed on the transparent electrode, a second substrate and a liquid crystal sealed between said two substrates by means of a seal holding the substrates together. A portion of the first substrate extends beyond an edge of the second substrate and has an extension of the transparent electrode formed thereon. The orientation film extends beyond a position corresponding to the edge of the second substrate up to a portion where a connector is connected to the transparent electrode. Thus, there is no portion exposing the transparent electrode to the surrounding air, thereby to avoid electrochemical corrosion.

JP-A-59-121316 discloses an electrooptic device having a similar structure, wherein the portion of the transparent electrode between the seal and a connector is covered by an insulating film specifically provided for this purpose.

JP-A-63-008633 discloses a similar electrooptic device with the orientation film extended to the portion of the transparent electrode outside of the seal, except for the portion of the seal itself.

JP-A-62-153826 discloses a color liquid crystal display device having on one substrate a color filter, an SiO₂ film, a polyimide film, a transparent electrode and an orientation film in this order.

The present invention is intended to remedy the above explained problems of the prior art and its object is to provide an electrooptic device having a transparent electrode on a color filter directly or through a single or plural organic or inorganic layers, which exhibits an improved chemical durability and particularly a high resistance against electric corrosion, and a high reliability.

According to the invention, this object is achieved by an electrooptic device as claimed in claim 1. Specific embodiments of the invention are claimed in the dependent claims.

Embodiments of the present invention will be described in detail hereinafter with reference to the accompanying drawings, in which:
Fig. 1 is a sectional view of a substrate with a color filter according to Example 1,
Fig. 2 is a sectional view of the electrooptic device according to Example 1,
Fig. 3 is a sectional view of a substrate with a color filter according to Example 2,
Fig. 4 is a sectional view of the electrooptic device according to Example 2,
Fig. 5 shows an electrooptic device according to Example 3, and
Fig. 6 is a sectional view of the electrooptic device according to Example 4.

The method for forming protective layers depends on the method for forming color filters. Therefore, the formation of the color filters will be described separately hereafter for each example. However, it goes without saying that an electrooptic device according to the present invention can be realized by methods for forming color filters and protective layers other than those given in the examples, and also the materials are not limited to those mentioned in the examples. Further, the thicker an orientation film, the better it serves to prevent the transparent electrode from having contact with the atmospheric air and hence it is preferable that the thickness is 5 nm (50 Å) or more or even better 20 nm (200 Å) or more.

### Example 1

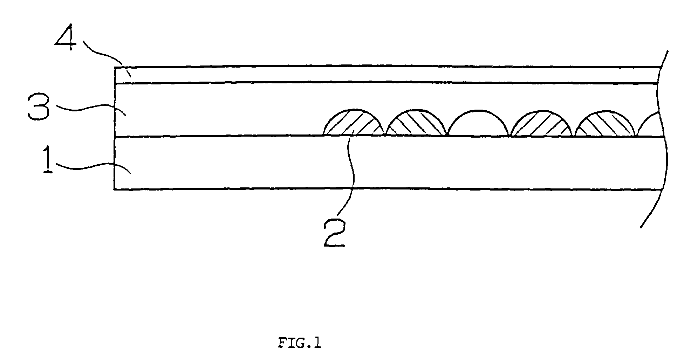

Fig. 1 shows a sectional view of a substrate with a color filter. A color filter 2 is formed on a glass substrate 1 by printing three kinds of ink in stripe form at a thickness of 1.5 µm through offset printing. Red, blue and green pigments are dispersed in the three kinds of inks, respectively. Then an acrylic resin is formed at a thickness of 10 µm through screen printing, flattened by grinding and then dried at 180°C for two hours. Thereby, a protective layer 3 is formed on the whole surface of the glass substrate 1 and the color filter 2. A transparent conductive film consisting of indium oxide - tin oxide (hereinafter referred to as ITO) is formed at a thickness of 200 nm (2000 Å) on the protective layer 3 at a temperature of 180°C through a cold magnetron sputtering. Transparent electrodes 4 are formed from this transparent conductive film by photolithography such that the electrodes extend perpendicularly to the color filter stripes.

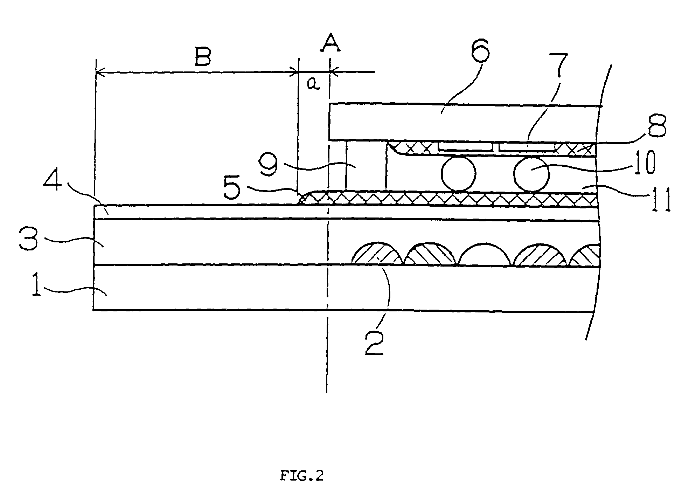

Fig. 2 shows the structure of an electrooptic device. As in the case of the glass substrate 1 shown in Fig. 1, a counter electrode 7 is formed on a glass substrate 6 by ITO in a matrix form. Orientation films 5, 8 made of polyimide are then formed at a thickness of 30 to 40 nm (300 to 400 Å) each. Then a liquid crystal 11 including a gap holding material 10 is filled into the gap between the two substrates and sealed by a seal 9. In the present example the twist angle of the liquid crystal material is 230° left and the cell gap is 6 µm.

As shown in Fig. 2, the width of the lower substrate 1 is larger than that of the upper substrate 6. The portion of the lower substrate 1 extending beyond the upper substrate forms an input terminal portion B. According to the invention, the orientation film 5 of the substrate 1 extends by a length a beyond a position A corresponding to the edge of the opposite substrate 6 barring the input terminal portion B. The effects of various values of the length a are shown in Table 1 and will be explained below.

The electrooptic device filled with the liquid crystal was first washed in an organic solvent such as triethane or the like and was then brushed in alkali water (2 to 4 wt %) for removing stain sticking to the input terminal portion and others. Subsequently, driving signals were applied to drive the device on a time sharing basis at a duty of the 1/200 to 1/400. A continuous test was carried out for 200 hours under an environment of 50°C - 90 RH% to investigate the occurrence of disconnections and other faults. Several samples were used in this test and every 50 hours some samples were taken out to check the number of disconnections and the particulars. The result is shown in Table 1. The line number of the sample devices used in this test was 200.

As to the washing of the electrooptic device, it may be washed by exposing it to ultrasonic waves in an alkaline surface active agent. However, there are no restrictions as regards the washing of the device provided that the input terminal portion and others as well as the seal are not physically damaged and the protective layer and others are not chemically damaged by the washing agent. In the present example, a brushing was carried out in an alkali water as mentioned above by a nylon rotary brush. In order to avoid that flaws result from brushing, the rotary brush was applied moderately so as to keep its hairs touching lightly.

**Table 1**

| Test results of the test carried out under continuous driving | |
|---|---|
| Length of portion a | Number of disconnections (Number of corrosions) |
| -1.0 mm | 5 lines (after 50h) |
| -0.5 mm | 6 lines (after 50h) |
| ±0 mm | 0 |
| +0.5 mm | 0 |
| +1.0 mm | 0 |

From Table 1 it will be understood that the effect of the present invention is achieved if the orientation film is extended to or beyond the position A, even if by a little distance only. While polyimide has been used for the orientation films in the present example, other materials or orientation agents may be used, e.g. preimide, polyamic acid, polyamide-imide.

### Example 2

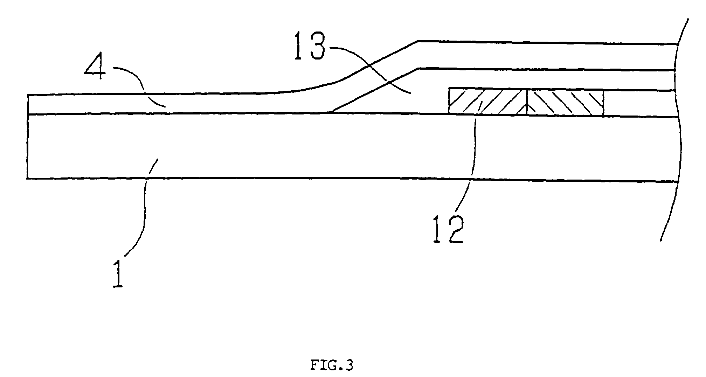

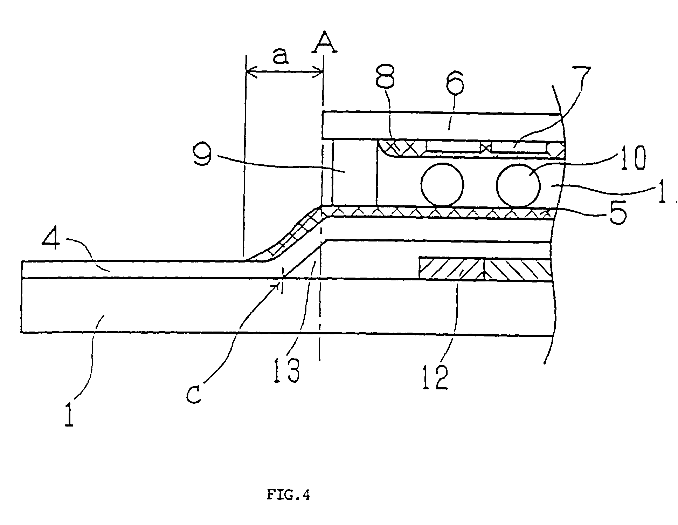

An example of the invention will be explained in the following with reference to Figs. 3 and 4. A sectional view of the color filter carrying substrate according to the invention is shown in Fig. 3. As in the case of Example 1, a color filter 12 is printed in stripe form on a glass substrate 1 through offset printing and is then pressed to become flat. Next, an epoxy acrylate resin having an UV light photosensitivity is coated to a thickness of 1.2 µm through spin coating and then selectively exposed to UV light to obtain a protective layer 13. The transparent electrode 4 is formed thereafter as in the case of Example 1.

The construction of the electrooptic device is shown in Fig. 4. As in the case of Example 1, a study was made with respect to both, the length a of the orientation film 5 on the color filter carrying substrate and the end position C of the protective layer 13. Various electrooptic devices with different values of these two parameters were made similar to Example 1. The electrooptic devices were washed and subjected to the same test as in Example 1 to allow for an easy comparison.

The test results are given in Table 2. As regards the position C, "in" indicates that it is inside of the seal 9 and "out" indicates that it is outside thereof.

**Table 2**

| Test results of the test carried out under continuous driving | | |
|---|---|---|
| Length of portion a | Length of portion C | Result |
| -0.5 mm | in | 1 pcs (after 50h) |
| ↑ | out (±0) | 5 pcs (after 50h) |
| ±0 mm | in | 0 |
| ↑ | out (±0) | 0 |
| +0.5 mm | in | 0 |
| ↑ | out (±0) | 0 |

As will be apparent from the results in Table 2, when the end portion of the protective layer 13 gets easily contact with the open air (outside of the seal 9), the strength of the ITO is not satisfactory and electric corrosion is likely to occur. It will be understood that an effect according to the invention will be realizable if the orientation film 5 comes at least to or outside of the position A even in this case. Further, the thickness of the liquid crystal layer can easily be controlled by forming the protective layer 13 preferably as far as to a position under the seal 9 and, thus, the degree of freedom as regards the position of the protective layer 13 will increase according to the method of the present invention.

It should be noted that the present invention is not restricted to the color filters and the way of forming them as mentioned with respect to Examples 1 and 2. Instead, other methods for forming the color filter (such as, for example, electrodeposition, a method of dispersing pigments into a polyimide type substrate and others, a method of dispersing pigments into substrates having a UV photosensitivity and of patterning by a photoprocess and others) and other materials (such as, for example, thermosetting melamine resin, epoxy resin, silicon resin and the like) as the protective layer may be employed. Further, in case the input terminal portion is formed on opposite sides of the color filter carrying substrate, the orientation film may likewise be formed on these opposite sides. However, where the input terminal portion is provided on one side only, the opposite side underlies no particular restriction and, hence, the orientation film may or may not come outside of the seal there. The opposite substrate is then not subjected to any restriction.

### Example 3

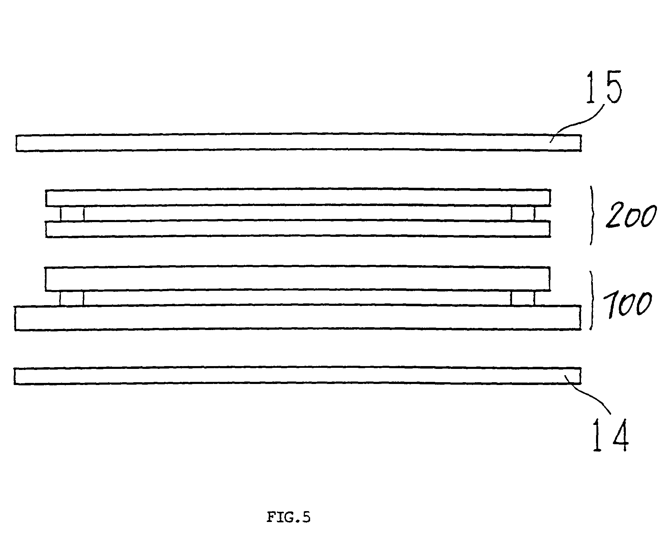

A third example will be explained with reference to Fig. 5 showing a dimming cell 100 and an optically anisotropic substance 200 arranged between polarizers 14 and 15. The dimming cell 100 is an electrooptic device as described in Example 2. The optically anisotropic substance 200 has the same optical characteristic as the dimming cell 100, namely a value of the product d x Δn (d = cell gap, Δn = refractive index anisotropy of the liquid crystal or the optically anisotropic substance is the same). In the present example, the optically anisotropic substance 200 uses the same liquid crystal as the dimming cell 100 having, however, a reverse twist (right) in the same cell gap. The angle formed by the orientations of the interface of the dimming cell 100 and the optically anisotropic substance 200 is 90° and the angle formed by the polarization axis of each polarizer and the orientation of adjacent side of the electrooptic device 100 and the optically anisotropic substance 200, respectively, is adjusted to 20 to 50° so as to have white at the time of all lighting. Then, an electrooptic device with high contrast and capable of indicating white and black can be formed. A similar effect can be achieved if a film is used as the optically anisotropic substance.

### Example 4

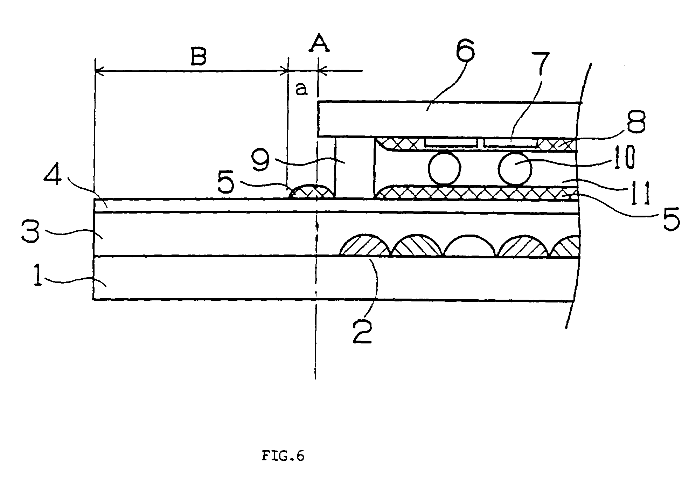

With reference to Fig. 6 a fourth example will be explained. After preparing the substrate with a color filter as in the case of Example 1, the counter electrode 7 is prepared in matrix form on the opposite glass substrate 6 using ITO. The orientation films 5, 8 are then formed of polyimide with a thickness of 30 to 40 nm (300 to 400 Å) in areas excluding those for the seal 9. The liquid crystal 11 and a gap material 10 are filled into the gap between the two substrates which are then sealed by the seal 9 to complete the electrooptic device.

As in the case of Example 1, several samples with different values of the length a were prepared, washed in an organic solvent such as triethane or the like, then brushed in an alkali water (2 to 4 wt %) for removing stain sticking to the input terminal portion and others and then tested for reliability. The results were similar to those of Example 1.

As is shown by the present example, from forming the orientation films concurrently inside of the seal and outside on the terminal portion at least within the area where the upper and lower substrates overly each other, the portion where electric corrosion is otherwise likely to occur is protected and, therefore, a similar effect as in Example 1 is obtained. It goes without saying that the idea of Example 4 can also be applied to Examples 2 and 3.

In the present example, while polyimide has been mentioned as an example for the orientation film material, other materials for example polyamide-imide, rhombic SiO₂, and others can be used, provided that they have a characteristic required to be used as orientation material and insulating property.

As has been described above, according to the present invention, the area covered by the orientation film on the color filter carrying substrate is extended outside of the region where two opposing substrates overlap each other.

## Claims

1. An electrooptic device comprising a first substrate (1), a transparent electrode (4) formed thereon, an orientation film (5) formed on the transparent electrode, a second substrate (6), and a liquid crystal (11) sealed between said two substrates by means of a seal (9) holding said substrates together, wherein a portion of said first substrate extends beyond an edge of said second substrate and has an extension of said transparent electrode (4) formed thereon and said orientation film (5) extends onto said portion,
characterized in that a color filter (2; 12) and a protective layer (3; 13) are formed between said first substrate and said transparent electrode (4), wherein the extension of said protective layer (13) onto said extending portion of said first substrate is less than that of said transparent electrode (4) and that of the orientation film (5).

2. The electrooptic device according to claim 1, wherein said orientation film (5) extends beyond a position corresponding to the edge of said second substrate (6) by an amount of no more than 1 mm.

3. The electrooptic device according to claim 1 or 2, wherein said orientation film (5) extends beyond said position corresponding to the edge of said second substrate (6) except for the area of said seal (9).

4. The electrooptic device according to any one of the preceding claims, wherein said protective layer includes one or more inorganic layers or organic resin layers.

5. An arrangement comprising an electrooptic device according to any of claims 1 to 4 as a dimming cell, a pair of polarizers (14, 15) on opposite sides of the dimming cell (100) and one or more optical anisotropic substances (200) between said dimming cell and said polarizers.

## Patentansprüche

1. Elektrooptische Vorrichtung, umfassend ein erstes Substrat (1), eine darauf ausgebildete transparente Elektrode (4), einen auf der transparenten Elektrode ausgebildeten Ausrichtungsfilm (5), ein zweites Substrat (6) und einen zwischen den beiden Substraten mit Hilfe einer die Substrate zusammenhaltenden Dichtung (9) eingeschlossenen Flüssigkristall (11), wobei sich ein Abschnitt des ersten Substrats über eine Kante des zweiten Substrats hinaus erstreckt und auf ihm eine Verlängerung der transparenten Elektrode (4) ausgebildet ist und sich der Ausrichtungsfilm (5) auf diesen Abschnitt erstreckt,
dadurch gekennzeichnet, daß ein Farbfilter (2; 12) und eine Schutzschicht (3; 13) zwischen dem ersten Substrat und der transparenten Elektrode (4) ausgebildet sind, wobei die Ausdehnung der Schutzschicht (13) auf dem Verlängerungsabschnitt des ersten Substrats geringer ist, als diejenige der transparenten Elektrode (4) und diejenige des Ausrichtungsfilms (5).

2. Elektrooptische Vorrichtung nach Anspruch 1, bei der der Ausrichtungsfilm (5) sich um einem Betrag von nicht mehr als 1 mm über eine Position hinaus erstreckt, die der Kante des zweiten Substrats (6) entspricht.

3. Elektrooptische Vorrichtung nach Anspruch 1 oder 2, bei der der Ausrichtungsfilm (5) sich über die der Kante des zweiten Substrats (6) entsprechende Position mit Ausnahme des Bereichs für die Dichtung (9) hinaus erstreckt.

4. Elektrooptische Vorrichtung nach einem der vorhergehenden Ansprüche, bei der die Schutzschicht eine oder mehrere anorganische Schichten oder organische Harzschichten enthält.

5. Anordnung umfassend eine elektrooptische Vorrichtung gemäß einem der Ansprüche 1 bis 4 als eine Dimmerzelle, ein Paar Polarisatoren (14, 15) auf entgegengesetzten Seiten der Dimmerzelle (100) und eine oder mehrere optische anisotrope Substanzen (200) zwischen der Dimmerzelle und den Polarisatoren.

## Revendications

1. Dispositif électro-optique comprenant un premier substrat (1), une électrode transparente (4) formée sur ce dernier, un film d'orientation (5) formé sur l'électrode transparente, un deuxième substrat (6) et un cristal liquide (11) mis en place entre lesdits deux substrats au moyen d'un joint (9) maintenant lesdits substrats réunis, une partie dudit premier substrat s'étendant au-delà d'un bord dudit deuxième substrat, un prolongement de ladite électrode transparente étant formée sur elle, et ledit film d'orientation (5) s'étendant sur ladite partie, caractérisé en ce qu'un filtre coloré (2 12) et une couche de protection (3 ; 13) sont formés entre ledit premier substrat et ladite électrode transparente (4), le prolongement de ladite couche de protection (13) sur ladite partie dudit premier substrat étant inférieur à celui de ladite électrode transparente (4) et à celle du film d'orientation (5).

2. Dispositif électro-optique selon la revendication 1, dans lequel ledit film d'orientation (5) s'étend au-delà d'une position correspondant au bord dudit deuxième substrat (6), sur une longueur non supérieure à 1 mm.

3. Dispositif électro-optique selon la revendication 1 ou 2, dans lequel ledit film d'orientation (5) s'étend au-delà de ladite position correspondant au bord dudit deuxième substrat (6), à l'exception de la zone dudit joint (9).

4. Dispositif électro-optique selon l'une quelconque des revendications précédentes, dans lequel ladite couche de protection comprend une ou plusieurs couches minérales ou couches de résine organique.

5. Montage comprenant un dispositif électro-optique selon l'une quelconque des revendications 1 à 4 comme cellule à effet gradateur, une paire de polariseurs (14, 15) sur les faces opposées de la cellule à effet gradateur (200), et une ou plusieurs substances optiquement anisotropes (100) entre ladite cellule à effet gradateur et lesdits polariseurs.
